# EUROPÄISCHE PATENTSCHRIFT

(11) **EP 3 323 597 B1**
(45) Veröffentlichungstag und Bekanntmachung des Hinweises auf die Patenterteilung: **02.10.2019**
(21) Anmeldenummer: 17194385.5
(22) Anmeldetag: 02.10.2017
(51) Int. Cl.: B29C 64/153, B29C 64/165, B29C 64/194, B29C 64/209, B29C 64/371, B33Y 10/00, B33Y 30/00, B22F 3/105

(54) **VORRICHTUNG UND VERFAHREN ZUR ADDITIVEN HERSTELLUNG EINES DREIDIMENSIONALEN PRODUKTES**
DEVICE AND METHOD FOR ADDITIVE MANUFACTURE OF A THREE-DIMENSIONAL PRODUCT
DISPOSITIF ET PROCÉDÉ DE FABRICATION ADDITIVE D'UN PRODUIT TRIDIMENSIONNEL

(30) Priorität: 21.11.2016 DE 102016222947
(43) Veröffentlichungstag der Anmeldung: 23.05.2018
(73) Patentinhaber: Robert Bosch GmbH, 70442 Stuttgart (DE)
(72) Erfinder: Echaniz, Aitor, 70197 Stuttgart (DE); Schoepf, Martin, 70499 Stuttgart (DE); Walther, Michael, 71272 Renningen (DE); Willeck, Hannes, 71272 Renningen (DE); Loeber, Lukas, 71638 Ludwigsburg (DE)

(56) Entgegenhaltungen:
- DE-A1-102004 031 881
- DE-A1-102011 075 748
- DE-A1-102013 215 377

## Beschreibung

Die Erfindung betrifft eine Vorrichtung und ein Verfahren zur additiven Herstellung eines dreidimensionalen Produktes, insbesondere aus einem Pulver durch lokal selektives Einwirken auf das Pulver.

Aus der DE 10 2006 014 835 A1 ist eine Vorrichtung zur Herstellung von Gegenständen durch schichtweises Aufbauen aus pulverförmigem, insbesondere metallischem oder/und keramischem Werkstoff bekannt. Aus der DE 10 2004 031881 A1 ist eine Vorrichtung zum Absaugen von Gasen, Dämpfen und/oder Partikeln aus dem Arbeitsbereich einer Laserbearbeitungsmaschine bekannt. Aus der DE 10 2013 215377 A1 ist eine Gasführungsvorrichtung zur Zuführung von Schutzgas zu einer Pulverplattform beziehungsweise zu einem Pulverbett bekannt.

Hiervon ausgehend ist es Aufgabe der hier vorliegenden Erfindung, die im Zusammenhang mit dem Stand der Technik bestehenden technischen Probleme zu lösen bzw. zumindest zu lindern.

Diese Aufgabe wird gelöst mit einer Vorrichtung und einem Verfahren gemäß den Merkmalen der unabhängigen Ansprüche. Durch die in den jeweiligen abhängigen Ansprüchen aufgeführten Merkmale sind vorteilhafte Weiterbildungen und Verbesserungen des Verfahrens und der Vorrichtung möglich.

Es wird eine Vorrichtung zur additiven Herstellung eines dreidimensionalen Produktes aus einem Pulver durch lokal selektives Einwirken auf das Pulver gemäß Anspruch 1 vorgestellt.

Die Herstellung des dreidimensionalen Produktes aus dem Pulver kann insbesondere schichtweise erfolgen. Dazu wird vorzugsweise zunächst eine Schicht des Pulvers auf einer Bearbeitungsebene der Prozesskammer erzeugt. Eine Vorrichtung zur Erzeugung einer solchen Schicht kann beispielsweise als ein Beschichter bezeichnet werden. Die von dem Beschichter erzeugte Schicht des Pulvers ist bevorzugt in einem gesamten Bearbeitungsbereich, in welchem sich das herzustellende Produkt befindet, gleichmäßig ausgebildet. Durch das lokal selektive Einwirken auf das Pulver der Schicht wird das Pulver derart verändert, dass daraus an dem momentanen Einwirkungsort (d.h. dort, wo zu einem bestimmten Zeitpunkt lokal auf das Pulver eingewirkt wird) das Material des dreidimensionalen Produktes entsteht. Dass das Einwirken lokal selektiv erfolgt, bedeutet, dass nur an den Stellen auf das Pulver eingewirkt wird, an denen das dreidimensionale Produkt in der jeweiligen Schicht Material aufweisen soll. Bevorzugt bleibt das Pulver an allen Orten an denen kein Material des dreidimensionalen Produktes entstehen soll pulverförmig. Dieser Vorgang kann für eine Vielzahl von aufeinander folgenden Schichten durchgeführt werden. Bevorzugt erfolgen mehrere Bearbeitungsschritte nacheinander, die jeweils das Erzeugen einer Schicht aus Pulver und anschließend das Bearbeiten der Schicht mit der Einwirkungsvorrichtung umfassen.

In einer bevorzugten Ausführungsvariante ist das Pulver so beschaffen, dass in der Schicht eine Haftung der einzelnen Pulverpartikel des Pulvers zueinander vorliegt. Es ist auch bevorzugt, wenn das Pulver so beschaffen ist, dass es durch sein Eigengewicht innerhalb der Schicht gehalten wird.

Diese Haftung bzw. die durch das Eigengewicht des Pulvers verursachten Kräfte sind bevorzugt so stark, dass durch die Verwendung der Schutzgaseinheit und die Schutzgasströmung kein unerwünschter Abtransport von Pulver bzw. von Pulverpartikeln aus der Schicht auftritt. Insbesondere ist die Haftung dazu geeignet zu gewährleisten, dass ein beliebiger Pulverpartikel der Schicht an seiner vorliegenden Position innerhalb der Schicht verbleibt, wenn die Schutzgaseinheit und die Schutzgasströmung in unmittelbarer Nähe diese Pulverpartikels auf das Pulver bzw. die Pulverschicht einwirken.

Die Einwirkungsvorrichtung kann beispielsweise dazu eingerichtet sein, das Pulver lokal selektiv aufzuschmelzen. Vorzugsweise ist die Einwirkungsvorrichtung eine Quelle für Strahlung aus einer Strahlenquelle wie z. B. ein Laser oder eine andere Quelle zur Erzeugung von gebündeltem Licht.

Die Prozesskammer ist vorzugsweise derart abgeschlossen, dass beispielsweise eine Schutzgasatmosphäre darin erzeugt werden kann und das Schutzgas nicht unerwünscht aus der Prozesskammer austritt. Bevorzugt ist die Prozesskammer dafür gasdicht verschließbar. Die Schutzgasatmosphäre kann die Qualität des herzustellenden dreidimensionalen Produkts verbessern. Dies liegt insbesondere daran, dass chemische Reaktionen (insbesondere Oxidationsreaktionen) durch das Schutzgas unterbunden werden können. Auch können durch eine Strömung des Schutzgases Prozessnebenprodukte (wie z. B. Spritzer oder Rauch) aus der Prozesskammer entfernt werden. Solche Prozessnebenprodukte könnten sich auf dem Pulver bzw. der Schicht aus Pulver ablagern und damit die Qualität des herzustellenden dreidimensionalen Produktes mindern.

Um die Prozessnebenprodukte besonders gut aus der Prozesskammer entfernen zu können, wird über die Schutzgaseinheit eine lokale Schutzgasströmung erzeugt. Eine lokale Schutzgasströmung ist mit einer verfahrbaren Schutzgaseinheit besonders gut erzeugbar. Eine lokale Schutzgasströmung hat den Vorteil, dass kleine Strömungsgeschwindigkeiten und kleine Massenströme und Volumenströme der Schutzgasströmung notwendig sind, um eine gewünschte Schutzwirkung an einem Einwirkungsort auf das Pulver zu gewährleisten.

Zusätzlich zu der mindestens einen verfahrbar angeordneten Schutzgaseinheit kann die Vorrichtung noch mindestens eine weitere nicht verfahrbare Schutzgaseiheit aufweisen. Eine solche nicht verfahrbare Schutzgaseinheit kann beispielsweise dazu eingerichtet sein die gesamte Prozesskammer mit einer gleichmäßigen Schutzgasströmung zu beaufschlagen. Diese Schutzgasströmung kann (in Abgrenzung zu der lokal erzeugten Schutzgasströmung) als globale Schutzgasströmung bezeichnet werden. Bevorzugt überlagern sich die globale Schutzgasströmung und die lokal erzeugte Schutzgasströmung miteinander.

Es ist bevorzugt, dass die lokale Schutzgasströmung ein inertes Gas (wie z. B. Stickstoff) umfasst. Die Schutzgaseinheit kann beispielsweise an einem Greifer oder an einer Halterung mit Antrieben befestigt sein. Durch eine Bewegung des Greifers oder der Haltung mit Hilfe der Antriebe wird die lokale Schutzgaseinheit bewegt bzw. verfahren. Vorzugsweise kann die Schutzgaseinheit derart verfahren werden, dass die lokale Schutzgasströmung an jedem möglichen momentanen Einwirkungsort erzeugt werden kann. Das bedeutet, dass mit der Schutzgaseinheit zumindest die Bereiche der Prozesskammer erreicht werden können, in denen auch mit der Einwirkungsvorrichtung auf das Pulver eingewirkt werden kann (bzw. die Bereiche, in denen eine Einwirkung auf das Pulver vorgesehen ist). Weiterhin ist es bevorzugt, dass die Schutzgaseinheit innerhalb einer Ebene parallel zu der Bearbeitungsebene verfahrbar ist. Wenn nacheinander eine Mehrzahl von Schichten des Pulvers mit der Einwirkungsvorrichtung bearbeitet werden, verschiebt sich die Bearbeitungsebene dabei von Schicht zu Schicht. Bevorzugt ist die Schutzgaseinheit so ausgeführt, dass sie senkrecht zu der Bearbeitungsebene verfahrbar ist. Diese senkrechte Verfahrbarkeit dient insbesondere auch dazu, die Schutzgaseinheit entsprechend zur jeweiligen Schicht auszurichten. Ein Abstand der Schutzgaseinheit zu der jeweils bearbeiteten Pulverschicht beträgt vorzugsweise 1 bis 15 mm [Millimeter]. In einer bevorzugten Ausführungsvariante ist der Abstand der Schutzgaseinheit zur jeweils bearbeiteten Pulverschicht jedoch ebenfalls anpassbar. Eine Anpassung dieses Abstandes ist beispielsweise vorteilhaft, um die Schutzgaseinheit an die Eigenschaften des jeweils verwendeten Pulvers und die Art- und Weise der Einwirkung auf das Pulver mit der Einwirkungsvorrichtung anzupassen. Dies kann beispielsweise sinnvoll sein, um die Wirkung der Schutzgaseinheit auf das Pulver anzupassen, insbesondere wenn unterschiedliche Arten von Pulver verwendet werden.

In einer bevorzugten Ausführungsform der Vorrichtung ist die Schutzgaseinheit derart mit der mindestens einen Einwirkungsvorrichtung gekoppelt, dass die Schutzgaseinheit kontinuierlich an den momentanen Einwirkungsort verfahren wird.

Vorzugsweise erfolgt sowohl das Verfahren der Schutzgaseinheit als auch das lokal selektive Einwirken auf das Pulver computergesteuert. In dem Fall sind die Schutzgaseinheit und die mindestens eine Einwirkungsvorrichtung über eine (vorzugsweise gemeinsame) Computersteuerung gekoppelt. Alternativ ist es bevorzugt, dass nur die Einwirkungsvorrichtung aktiv gesteuert wird und dass die Schutzgaseinheit der Einwirkungsvorrichtung passiv folgt. Dazu kann z. B. durch einen Sensor der momentane Einwirkungsort ermittelt werden und die Schutzgaseinheit an diesen verfahren werden. Auch ist es möglich, dass die Schutzgaseinheit mechanisch mit der Einwirkungsvorrichtung gekoppelt ist, beispielsweise durch eine direkte mechanische Verbindung, welche bewirkt, dass die Schutzgaseinheit immer unmittelbar der Einwirkungsvorrichtung folgt.

Diese Ausführungsform bietet den Vorteil, dass die lokale Schutzgasströmung an dem momentanen Einwirkungsort erzeugt werden kann. Insbesondere am momentanen Einwirkungsort können Prozessnebenprodukte entstehen und/oder den Herstellungsprozess ungewünscht beeinflussen. In dieser Ausführungsform können die Prozessnebenprodukte besonders schnell nach deren Entstehung entfernt werden. Dabei ist bevorzugt eine besonders geringe Schutzgasströmung notwendig. In einer weiteren bevorzugten Ausführungsform der Vorrichtung weist die Schutzgaseinheit mindestens einen Gasauslass und mindestens einen Gaseinlass auf, wobei der mindestens eine Gasauslass und der mindestens eine Gaseinlass radial zu einem Zentrum der Schutzgaseinheit ausgerichtet sind.

Vorzugsweise weist die Schutzgaseinheit eine zentrale Öffnung auf, die sich im Betrieb immer an dem momentanen Einwirkungsort befindet. Die Einwirkungsvorrichtung kann durch die zentrale Öffnung auf das Pulver einwirken. Die Schutzgaseinheit wird dafür so verfahren und positioniert, dass der Einwirkungsort und die zentrale Öffnung überlappen. Insbesondere innerhalb und oberhalb der zentralen Öffnung kann die lokale Schutzgasströmung erzeugt werden. Das Zentrum der Schutzgaseinheit befindet sich vorzugsweise innerhalb der zentralen Öffnung (insbesondere im Zentrum der zentralen Öffnung). Über den mindestens einen Gasauslass kann das Schutzgas aus der Schutzgaseinheit austreten (vorzugsweise in die Öffnung hinein). Dies kann beispielsweise parallel zu einer Oberfläche der Bearbeitungsebene bzw. einer darauf befindlichen (obersten und damit momentan zu bearbeitenden) Pulverschicht erfolgen.

Erfindungsgemäß ist es jedoch, dass der mindestens eine Gasauslass derart ausgeführt ist, dass das Schutzgas mit einem Winkel von 1° bis 20°. von der Pulverschicht bzw. der Bearbeitungsebene weggerichtet aus dem mindestens einen Gasauslass austritt. Dazu ist der mindestens eine Gasauslass um einen entsprechenden Winkel von der Bearbeitungsebene weg geneigt. Dies kann beispielsweise durch eine entsprechende Anordnung und Orientierung des mindestens einen Gasauslasses und/oder durch Strömungsleitstrukturen (insbesondere Leitbleche) im Bereich des mindestens einen Gasauslasses erreicht werden. Tritt das Schutzgas wie beschrieben etwas von der Pulverschicht weggerichtet aus dem mindestens einen Gasauslass aus, kann ein (insbesondere mechanisches) Wechselwirken der lokalen Schutzgasströmung mit dem Pulver reduziert oder vermieden werden. Insbesondere könnte z. B. bei einer auf das Pulver gerichteten Schutzgasströmung das Pulver verwirbelt werden. Hierdurch ist nur eine geringe Haftung bzw. eine geringe Kraft zum Halten von Pulverpartikeln innerhalb der jeweiligen Pulverschicht erforderlich.

Durch den mindestens einen Gaseinlass wird das Schutzgas eingesaugt. Vorzugsweise sind der mindestens eine Gaseinlass und der mindestens eine Gasauslass derart angeordnet, dass eine zirkulierende Strömung oberhalb der Pulverschicht an dem momentanen Einwirkungsort erzeugt werden kann. Ausgehend von der Bearbeitungsebene ist der mindestens eine Gaseinlass bevorzugt oberhalb des mindestens einen Gasauslasses angeordnet. Bevorzugt strömt die aus dem mindestens einen Gasauslass ausströmende Schutzgasströmung zunächst über den Einwirkungsort, um anschließend von der Bearbeitungsebene weg in Richtung zum mindestens einen Gasauslass zu strömen.

In einer weiteren bevorzugten Ausführungsform der Vorrichtung weist die Schutzgaseinheit mindestens einen Gasauslass und mindestens einen Gaseinlass auf, wobei der mindestens eine Gasauslass und der mindestens eine Gaseinlass gegenüber gegenüber einem Zentrum der Schutzgaseinheit zumindest teilweise tangential ausgerichtet sind.

Die weiter oben in Zusammenhang mit einer radialen Ausrichtung beschriebenen Merkmale sind auf eine Vorrichtung mit zumindest teilweise tangential ausgerichtetem Einlass und Auslass übertragbar. Insbesondere existiert auch bei dieser Ausführungsvariante bevorzugt eine zentrale Öffnung, die mit dem Einwirkungsort der Einwirkungsvorrichtung überlappt.

Bevorzugt ist der mindestens eine Gasauslass in einem geringeren Abstand von dem Zentrum der zentralen Öffnung bzw. dem Einwirkungsort angeordnet als der mindestens eine Gaseinlass. Bevorzugt sind der mindestens eine Gaseinlass und der mindestens eine Gasauslass derart angeordnet, dass eine spiralförmige Schutzgasströmung erzeugt werden kann, die insbesondere von dem Einwirkungsort nach außen strömt, um einen Abtransport von Verunreinigungen und Nebenprodukten von dem Einwirkungsort zu gewährleisten.

In einer weiteren bevorzugten Ausführungsform der Vorrichtung ist die Schutzgaseinheit um den momentanen Einwirkungsort umlaufend ausgeführt.

Die Schutzgaseinheit kann z. B. rechteckig oder mehreckig ausgeführt sein. Insbesondere in dieser Ausführungsform umfasst die Schutzgaseinheit eine zentrale Öffnung, innerhalb derer die lokale Schutzgasströmung erzeugt werden kann. Die Schutzgaseinheit wird vorzugsweise derart verfahren, dass sich die Öffnung immer an dem momentanen Einwirkungsort befindet. Die lokale Schutzgasströmung kann damit von allen Seiten auf den momentanen Einwirkungsort (vorzugsweise gleichmäßig) einwirken.

Bei einer umlaufenden Ausführungsform der Schutzgaseinheit können mehrere Gaseinlässe und mehrere Gasauslässe existieren, die entlang eines Umfangs um die zentrale Öffnung bzw. den Einwirkungsort herum verteilt angeordnet sind.

In einer weiteren bevorzugten Ausführungsform der Vorrichtung ist die Schutzgaseinheit ringförmig ausgeführt. Eine ringförmige Ausführungsform der Schutzgaseinheit zeichnet sich insbesondere dadurch aus, dass diese kreisförmig um den Einwirkungsort herum ausgebildet ist. Gaseinlässe und Gasauslässe sind bevorzugt in jeder radialen Richtung (ausgehend vom Einwirkungsort) in einem gleichen Abstand zu dem Einwirkungsort angeordnet.

In dieser Ausführungsform kann eine besonders gleichmäßige lokale Schutzgasströmung erreicht werden. Besonders bevorzugt ist es hier, dass eine Mehrzahl von Gasauslässen und eine Mehrzahl von Gaseinlässen jeweils gleichmäßig (d.h. mit gleichen Abständen zueinander) über die ringförmige Schutzgaseinheit verteilt angeordnet sind.

In einer weiteren bevorzugten Ausführungsform der Vorrichtung ist die mindestens eine Einwirkungsvorrichtung als eine Strahlenquelle ausgeführt, wobei das Pulver zumindest teilweise von einem Metall gebildet ist.

Die Strahlenquelle ist besonders bevorzugt ein Laser. Mit einem Laser kann das metallische Pulver lokal zum Schmelzen gebracht werden. Mit dieser Ausführungsform können dreidimensionale Produkte aus Metall erhalten werden. Insbesondere beim Schmelzen von Metall mit einem Laser entstehen Nebenprodukte, die mit der beschriebenen Vorrichtung umfassend eine verfahrbare Schutzgaseinheit besonders effizient abtransportiert werden können.

Als weiterer Aspekt wird ein Verfahren zur additiven Herstellung eines dreidimensionalen Produktes aus einem Pulver durch lokal selektives Einwirken auf das Pulver gemäß Anspruch 7 vorgestellt.

Die angegebenen Verfahrensschritte a), b) und c) werden bevorzugt in der angegebenen Reihenfolge wiederholt durchgeführt, wobei diese Verfahrensschritte für jede Pulverschicht ausgeführt werden.

Die weiter vorne beschriebenen besonderen Vorteile und Ausgestaltungsmerkmale der Vorrichtung sind auf das beschriebene Verfahren anwendbar und übertragbar. Für die Ausführung des Verfahrens wird eine Vorrichtung wie weiter oben beschrieben verwendet.

In einer bevorzugten Ausführungsform des Verfahrens ist das Pulver zumindest teilweise von einem Metall gebildet, wobei die Einwirkung auf das Pulver in Schritt b) durch selektives Laserstrahlschmelzen realisiert wird.

Mit diesem Verfahren können dreidimensionale Produkte aus einem Metall erzeugt werden.

Die Erfindung und das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine Querschnittsansicht einer Vorrichtung zur additiven Herstellung eines dreidimensionalen Produktes aus einem Pulver durch lokal selektives Einwirken auf das Pulver,
- Fig. 2:: eine detailliertere Querschnittsansicht der Schutzgaseinheit aus Fig. 1,
- Fig. 3:: eine Querschnittsansicht einer ersten Ausführungsform einer Halterung für eine Schutzgaseinheit,
- Fig. 4:: eine Draufsicht auf die Halterung für die Schutzgaseinheit aus Fig. 3, und
- Fig. 5 bis 8:: weitere Ausführungsformen einer Halterung für eine Schutzgaseinheit.

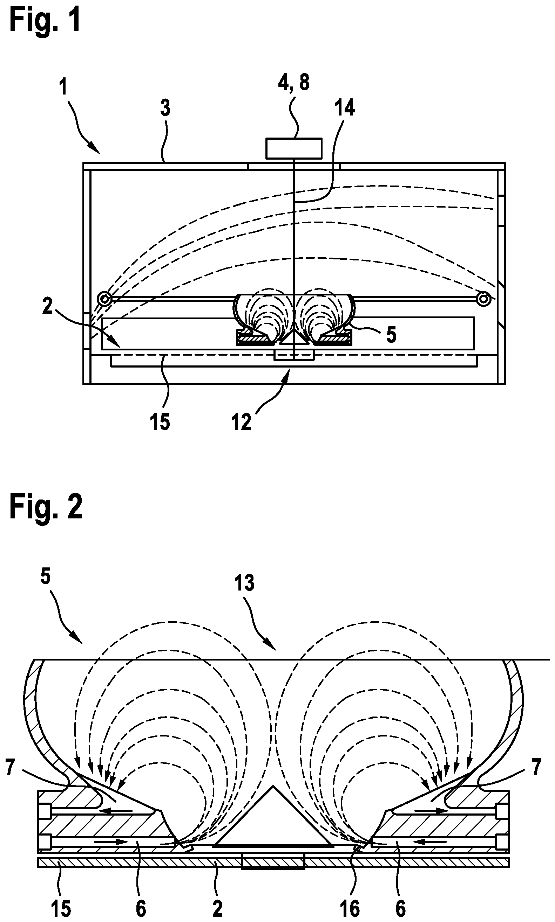

Fig. 1 zeigt eine Vorrichtung 1 zur additiven Herstellung eines dreidimensionalen Produktes aus einem Pulver 2 durch lokal selektives Einwirken auf das Pulver 2. Die Vorrichtung 1 umfasst eine Prozesskammer 3, innerhalb derer das dreidimensionale Produkt hergestellt werden kann. Das Pulver 2 liegt hier in einer Bearbeitungsebene 15 als Schicht vor. Weiterhin umfasst die Vorrichtung 1 eine Einwirkungsvorrichtung 4 zum lokal selektiven Einwirken auf das Pulver 2. Die Einwirkungsvorrichtung 4 ist als ein Laser 8 ausgeführt, welcher mit einem Laserstrahl 14 an einem Einwirkungsort 12 auf das Pulver einwirkt. Außerdem umfasst die Vorrichtung 1 eine Schutzgaseinheit 5 zum Bereitstellen eines Schutzgases und zur lokalen Erzeugung einer Schutzgasströmung an einem momentanen Einwirkungsort 12. Die Schutzgaseinheit 5 ist innerhalb der Prozesskammer 3 verfahrbar angeordnet. Die Schutzgaseinheit 5 ist umlaufend und um den momentanen Einwirkungsort 12 herum ausgeführt.

In Fig. 2 ist die Schutzgaseinheit 5 aus Fig. 1 detaillierter in einer Schnittdarstellung dargestellt. Zu erkennen ist insbesondere, dass die Schutzgaseinheit 5 Gasauslässe 6 und Gaseinlässe 7 aufweist, von denen in dieser Schnittdarstellung jeweils zwei zu erkennen sind. Die Gasauslässe 6 und die Gaseinlässe 7 sind radial zu einem Zentrum der Schutzgaseinheit 5 angeordnet. Durch diese Anordnung der Gasauslässe 6 und der Gaseinlässe 7 kann die eingezeichnete Strömung des Schutzgases erzeugt werden. Die Strömung ist beim Austritt aus den Gasauslässen 6 von einer Oberfläche des Pulvers 2 weggerichtet, um z. B. Verwirbelungen des Pulvers 2 zu vermeiden. Weiterhin ist zu erkennen, dass die Schutzgaseinheit 5 eine Öffnung 13 aufweist. Die Öffnung 13 wird im Betrieb der Vorrichtung 1 kontinuierlich an den momentanen Einwirkungsort 12 verfahren. Zu erkennen ist auch eine Strömungsleitstruktur 16, die die aus den Gasauslässen auströmende Strömung mit einem Winkel von einer Bearbeitungsebene 15 weg lenkt. Zu erkennen ist, außerdem, dass Gasauslässe 6 einen geringeren Abstand von dem Einwirkungsort 12 haben als Gaseinlässe 7. Damit werden Verunreinigungen und Nebenprodukte von innen nach außen von dem Einwirkungsort 12 weg transportiert.

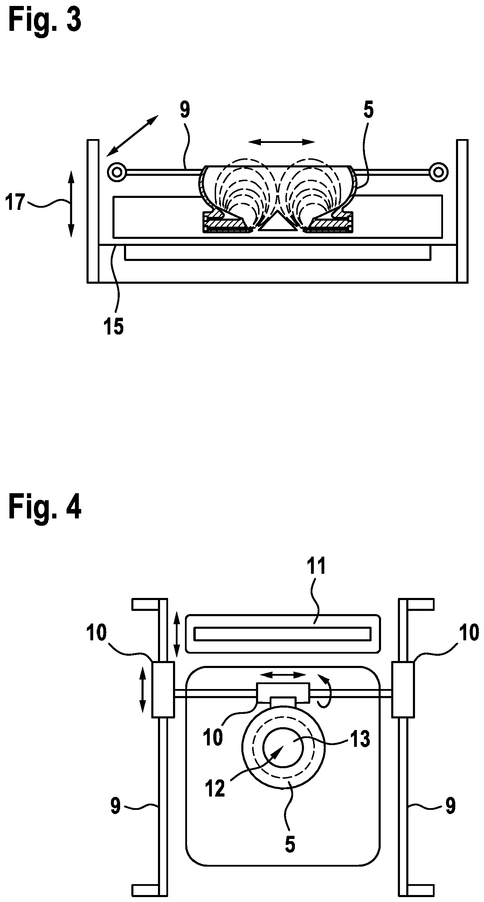

Fig. 3 zeigt eine erste Ausführungsform einer Halterung 9 für eine Schutzgaseinheit 5 in einer Querschnittsansicht. Durch die Halterung 9 kann die Schutzgaseinheit 5 in der Zeichnung sowohl nach rechts und links (wie durch den Doppelpfeil angedeutet) als auch senkrecht zur Zeichnungsebene verfahren werden. Letzteres ist in Fig. 4 verdeutlicht. Fig. 3 zeigt außerdem eine senkrechte Verfahrrichtung 17 gemäß welcher die Halterung 9 und die Schutzgaseinheit 2 senkrecht zur Bearbeitungsebene verfahrbar sind, um die Position der Schutzgaseinheit für verschiedene Schichten von Pulver anzupassen.

Die Fig. 4 zeigt die Halterung 9 für die Schutzgaseinheit 5 aus Fig. 4 in einer Draufsicht. Zu erkennen ist, dass mit der Halterung 9 und der Schutzgaseinheit 5 die gesamte Bearbeitungsebene 15 abgefahren werden können, um die Schutzgaseinheit an jedem beliebigen Einwirkungsort 12 in der Bearbeitungsebene 15 zu positionieren. Dazu sind Antriebe 10 vorgesehen, über die die Halterung 9 und/oder die Schutzgaseinheit 5 bewegt werden können. In dieser Darstellung ist besonders gut zu erkennen, dass die Schutzgaseinheit 5 ringförmig und um den momentanen Einwirkungsort 12 umlaufend ausgeführt ist, sodass eine zentrale Öffnung 13 gebildet ist. Weiterhin ist ein Beschichter 11 eingezeichnet mit welchem eine neue Schicht von Pulver in eine Bearbeitungsebene gebracht werden kann.

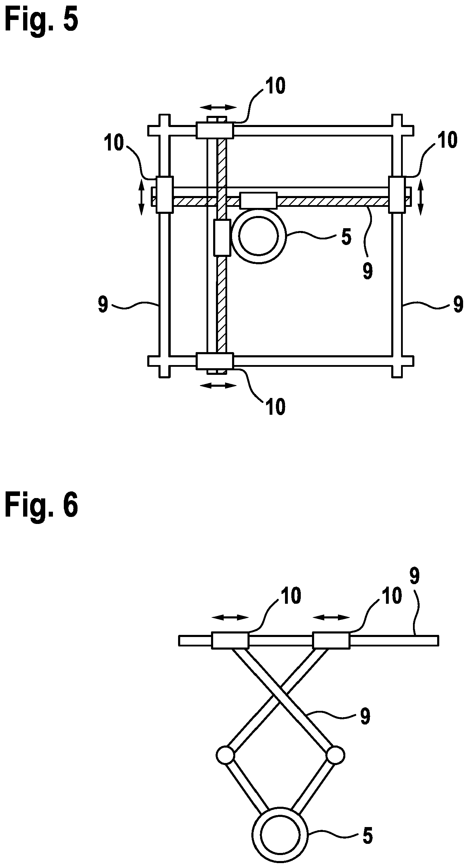

Fig. 5 zeigt eine weitere Ausführungsform einer Halterung 9 für eine Schutzgaseinheit 5. Hier sind für jede Bewegungsrichtung der Halterung 9 mehrere Antriebe 10 vorgesehen. Sich gegenüberliegende Antriebe 10 werden in dieser Ausführungsform jeweils paarweise verwendet. Damit kann ein Verfahren der Schutzgaseinheit 5 nach rechts/links bzw. nach oben/unten erreicht werden. Eine derartige Ausgestaltung der Halterung 9 kann auch als Kulissenform bezeichnet werden.

Fig. 6 zeigt eine weitere Ausführungsform einer Halterung 9 für eine Schutzgaseinheit 5 mit Antrieben 10. Durch paralleles Verfahren der Antriebe 10 kann in dieser Ausführungsform eine rechts/links-Bewegung der Schutzgaseinheit 5 erreicht werden. Werden die Antriebe 10 auseinander bzw. zusammen gefahren, so kann damit eine Bewegung der Schutzgaseinheit nach oben bzw. unten erreicht werden. Eine derartige Ausgestaltung der Halterung 9 kann auch als Scherenform bezeichnet werden.

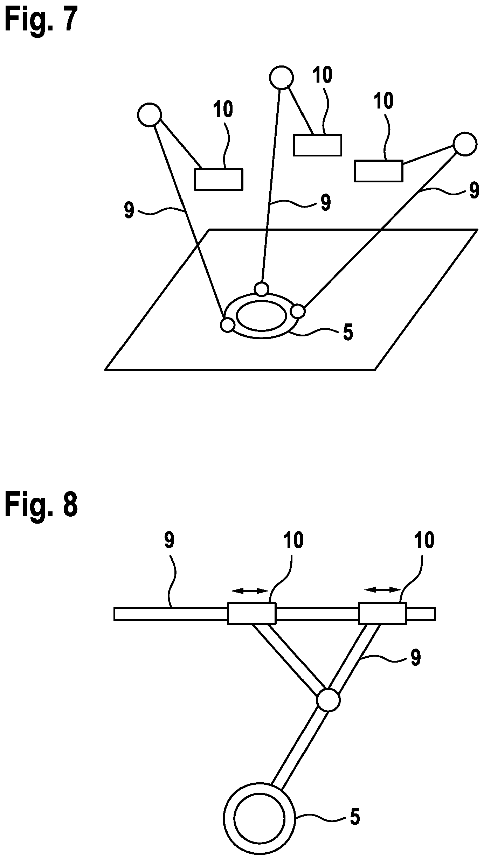

Fig. 7 zeigt eine weitere Ausführungsform einer Halterung 9 für eine Schutzgaseinheit 5. In dieser Ausführungsform erfolgt die Bewegung der Schutzgaseinheit 5 durch dreidimensionales Zusammenspiel von drei Antrieben 10.

Fig. 8 zeigt eine weitere Ausführungsform einer Halterung 9 für eine Schutzgaseinheit 5 mit Antrieben 10. Durch paralleles Verfahren der Antriebe 10 kann in dieser Ausführungsform eine rechts/links-Bewegung der Schutzgaseinheit 5 erreicht werden. Werden die Antriebe 10 auseinander bzw. zusammen gefahren, so kann damit eine Bewegung der Schutzgaseinheit nach oben bzw. unten erreicht werden. Eine derartige Ausgestaltung der Halterung 9 kann auch als Lambdaform bezeichnet werden.

## Patentansprüche

1. Vorrichtung (1) zur additiven Herstellung eines dreidimensionalen Produktes aus einem Pulver (2) durch lokal selektives Einwirken auf das Pulver (2), wobei die Vorrichtung (1) zumindest aufweist:
- eine Prozesskammer (3), innerhalb derer das dreidimensionale Produkt hergestellt werden kann,
- mindestens eine Einwirkungsvorrichtung (4) zum lokal selektiven Einwirken auf das Pulver (2) an einem Einwirkungsort (12), und
- mindestens eine Schutzgaseinheit (5) zum Bereitstellen eines Schutzgases und zur lokalen Erzeugung einer Schutzgasströmung an einem momentanen Einwirkungsort (12), wobei die Schutzgaseinheit (5) innerhalb der Prozesskammer (3) verfahrbar angeordnet ist;
wobei die Schutzgaseinheit (5) mindestens einen Gasauslass (6) und mindestens einen Gaseinlass (7) aufweist, und wobei der mindestens eine Gasauslass (6) und der mindestens eine Gaseinlass (7) radial zu einem Zentrum der Schutzgaseinheit (5) oder gegenüber einem Zentrum der Schutzgaseinheit (5) zumindest teilweise tangential ausgerichtet sind und wobei der mindestens eine Gasauslass (6) derart ausgeführt ist, dass das Schutzgas mit einem Winkel von 1° bis 20° von der Pulverschicht bzw. der Bearbeitungsebene weggerichtet aus dem mindestens einen Gasauslass (6) austritt.

2. Vorrichtung (1) nach Anspruch 1, wobei die Schutzgaseinheit (5) derart mit der mindestens einen Einwirkungsvorrichtung (4) gekoppelt ist, dass die Schutzgaseinheit (5) kontinuierlich an den momentanen Einwirkungsort (12) verfahren wird.

3. Vorrichtung (1) nach einem der vorhergehenden Ansprüche, wobei die Schutzgaseinheit (5) mindestens einen Gasauslass (6) und mindestens einen Gaseinlass (7) aufweist, wobei der mindestens eine Gaseinlass (7) ausgehend von einer Bearbeitungsebene (15) und/oder einem Einwirkungsort (12) oberhalb des mindestens einen Gasauslass (6) angeordnet ist.

4. Vorrichtung (1) nach einem der vorhergehenden Ansprüche, wobei die Schutzgaseinheit (5) um den momentanen Einwirkungsort (12) umlaufend ausgeführt ist.

5. Vorrichtung (1) nach einem der vorhergehenden Ansprüche, wobei die Schutzgaseinheit (5) ringförmig ausgeführt ist.

6. Vorrichtung (1) nach einem der vorhergehenden Ansprüche, wobei die mindestens eine Einwirkungsvorrichtung (4) als eine Strahlenquelle (8) ausgeführt ist, und wobei das Pulver (2) zumindest teilweise von einem Metall gebildet ist.

7. Verfahren zur additiven Herstellung eines dreidimensionalen Produktes aus einem Pulver (2) durch lokal selektives Einwirken auf das Pulver (2) mittels einer Vorrichtung (1) nach einem der vorhergehenden Ansprüche, umfassend zumindest die folgenden Verfahrensschritte:
a) schichtweises Bereitstellen des Pulvers (2),
b) lokal selektives Einwirken auf das Pulver (2), wobei durch die Einwirkung aus dem Pulver (2) das Material des Produktes entsteht, und
c) lokales Erzeugen einer Schutzgasströmung an einem momentanen Einwirkungsort (12).

8. Verfahren nach Anspruch 7, wobei das Pulver (2) zumindest teilweise von einem Metall gebildet ist, und wobei die Einwirkung auf das Pulver (2) in Schritt b) durch selektives Laserstrahlschmelzen realisiert wird.

## Claims

1. Device (1) for additive production of a three-dimensional product from powder (2) by means of locally selective action on the powder (2), wherein the device (1) at least has:
- a process chamber (3), within which the three-dimensional product can be produced,
- at least one action device (4) for locally selective action on the powder (2) at an action location (12), and
- at least one protective gas unit (5) for providing a protective gas and for the local generation of a protective gas flow at a current action location (12), wherein the protective gas unit (5) is moveably arranged within the process chamber (3);
wherein the protective gas unit (5) has at least one gas outlet (6) and at least one gas inlet (7), and wherein the at least one gas outlet (6) and the at least one gas inlet (7) are oriented radially relative to a centre of the protective gas unit (5) or at least partially tangentially with respect to a centre of the protective gas unit (5), and wherein the at least one gas outlet (6) is formed in such a way that the protective gas emerges from the at least one gas outlet (6) directed away from the powder layer or the processing plane at an angle of 1° to 20°.

2. Device (1) according to Claim 1, wherein the protective gas unit (5) is coupled to the at least one action device (4) in such a way that the protective gas unit (5) is moved continuously to the current action location (12).

3. Device (1) according to one of the preceding claims, wherein the protective gas unit (5) has at least one gas outlet (6) and a least one gas inlet (7), wherein the at least one gas inlet (7) is arranged above the at least one gas outlet (6), starting from a processing plane (15) and/or an action location (12).

4. Device (1) according to one of the preceding claims, wherein the protective gas unit (5) is formed circumferentially around the current action location (12).

5. Device (1) according to one of the preceding claims, wherein the protective gas unit (5) is formed in the manner of a ring.

6. Device (1) according to one of the preceding claims, wherein the at least one action device (4) is designed as a radiation source (8), and wherein the powder (2) is at least partly formed from a metal.

7. Method for additive production of a three-dimensional product from a powder (2) by means of locally selective action on the powder (2) by means of a device (1) according to one of the preceding claims, comprising at least the following method steps:
a) layered provision of the powder (2),
b) locally selective action on the powder (2), wherein the material of the product is produced from the powder (2) by the action, and
c) local generation of a protective gas flow at a current action location (12).

8. Method according to Claim 7, wherein the powder (2) is at least partly formed by a metal, and wherein the action on the powder (2) in step b) is implemented by selective laser beam melting.

## Revendications

1. Dispositif (1) de fabrication additive d'un produit tridimensionnel à partir d'une poudre (2) par action locale sélective sur la poudre (2), dans lequel le dispositif (1) comprend au moins :
- une chambre de traitement (3) à l'intérieur de laquelle le produit tridimensionnel peut être fabriqué,
- au moins un dispositif d'action (4) destiné à agir localement sur la poudre (2) en un point d'action (12), et
- au moins une unité (5) à gaz protecteur destinée à fournir un gaz protecteur et à générer localement un flux de gaz protecteur en un point d'action instantanée (12), dans lequel l'unité de gaz protecteur (5) est disposée de manière déplaçable dans la chambre de traitement (3) ; dans lequel l'unité de gaz protecteur (5) comporte au moins une sortie de gaz (6) et au moins une entrée de gaz (7), et dans lequel ladite au moins une sortie de gaz (6) et ladite au moins une entrée de gaz (7) sont orientées radialement par rapport à un centre de l'unité de gaz protecteur (5) ou au moins en partie tangentiellement par rapport à un centre de l'unité de gaz protecteur (5) et dans lequel ladite au moins une sortie de gaz (6) est réalisée de manière à ce que le gaz protecteur sorte de ladite au moins une sortie de gaz (6) sous un angle de 1° à 20° par rapport à la couche de poudre ou au plan de traitement.

2. Dispositif (1) selon la revendication 1, dans lequel l'unité de gaz protecteur (5) est couplée à au moins un dispositif d'action (4) de manière à ce que l'unité de gaz protecteur (5) soit amenée de manière continue à la position d'action instantanée (12).

3. Dispositif (1) selon l'une des revendications précédentes, dans lequel l'unité de gaz protecteur (5) comporte au moins une sortie de gaz (6) et au moins une entrée de gaz (7), dans lequel ladite au moins une entrée de gaz (7) est disposée au-dessus de ladite au moins une sortie de gaz (6) par rapport à un plan de traitement (15) et/ou à un point d'action (12).

4. Dispositif (1) selon l'une des revendications précédentes, dans lequel l'unité de gaz protecteur (5) est réalisée de manière à tourner autour du point d'action instantanée (12).

5. Dispositif (1) selon l'une des revendications précédentes, dans lequel l'unité de gaz protecteur (5) est réalisée sous forme annulaire.

6. Dispositif (1) selon l'une des revendications précédentes, dans lequel ledit au moins un dispositif d'action (4) est réalisé sous la forme d'une source de rayonnement (8), et dans lequel la poudre (2) est constituée au moins en partie d'un métal.

7. Procédé de fabrication additive d'un produit tridimensionnel à partir d'une poudre (2) par action locale sélective sur la poudre (2) au moyen d'un dispositif (1) selon l'une des revendications précédentes, comprenant au moins les étapes de procédé suivantes :
a) la fourniture de la poudre (2) couche par couche,
b) l'action sélective locale sur la poudre (2), dans lequel le matériau du produit est constitué par l'action de la poudre (2), et
c) la génération locale d'un flux de gaz protecteur en un point d'action instantanée (12).

8. Procédé selon la revendication 7, dans lequel la poudre (2) est constituée au moins en partie d'un métal, et dans lequel l'action sur la poudre (2) lors de l'étape b) est réalisée par fusion sélective par faisceau laser.
